# EUROPEAN PATENT SPECIFICATION

(11) **EP 3 281 554 B1**
(45) Date of publication and mention of the grant of the patent: **13.03.2019**
(21) Application number: 17185283.3
(22) Date of filing: 08.08.2017
(51) Int. Cl.: A47B 96/06, F16B 12/22

(54) **CONCEALABLE JOINING SYSTEM FOR PANELS OF A PIECE OF FURNITURE OR THE LIKE**
VERSTECKBARES VERBINDUNGSSYSTEM FÜR PANEELE EINES MÖBELSTÜCKS ODER DERGLEICHEN
SYSTÈME D'ASSEMBLAGE DISSIMULABLE POUR PANNEAUX D'UN MEUBLE OU SIMILAIRE

(30) Priority: 11.08.2016 IT 201600084644
(43) Date of publication of application: 14.02.2018
(73) Proprietor: O.M.M. Srl dell'Ing. Roberto Natale Mariani, 20832 Desio (MB) (IT)
(72) Inventor: MARIANI, Roberto Natale, 20832 Desio (MB) (IT)
(74) Representative: Colombo, Stefano Paolo

(56) References cited:
- EP-A1- 2 609 833
- WO-A1-2015/158622

## Description

### BACKGROUND

The present invention relates to a concealable joining system for fastening together two panels of a piece of furniture or the like.

### STATE OF THE ART

As is known, a piece of furniture (or "furniture unit") typically comprises two vertical panels (commonly called "flanks" or "shoulders"), a horizontal bottom panel (commonly called "base") and a top panel which is also horizontal (commonly called "lid"). Furthermore, the furniture unit may comprise a number of horizontal intermediate panels, otherwise known as "shelves".

During assembly of the furniture unit, the shoulders are typically fastened together with the bottom panel of the furniture unit and with the top panel. Moreover, the intermediate panels are usually fastened to the shoulders of the furniture unit so as to form shelves and/or in order to reinforce the furniture unit.

In particular, a shelf of a furniture unit may be a shelf with a single visible edge (also called "single-face" or "blind" shelf) or a shelf with double visible edge (also called "double-face" shelf). In the first case it consists of a shelf where, when the furniture unit is assembled, only the front edge is visible and the rear edge usually rests against a panel or a rear wall of the furniture unit. In the second case instead it consists of a shelf which, when the furniture unit is assembled, may have visible both the front edge and the rear edge.

Joining devices are known. For example WO 2010/034467 describes a system for inserting and fixing a shelf for frontal insertion in a modular furniture unit - comprising at least two side walls, a plurality of shelves and means for connection to the side walls and for supporting the shelves - comprising a first support and a second support designed to be inserted inside a longitudinal groove formed in a side wall of the shelf without projecting from said groove and fixed there, and at least two pins fixed to a side wall of the furniture unit and designed to be inserted in the supports. The first support is located at the end of the groove adjacent to the edge of the shelf which is visible when the shelf is inserted between the side walls and the second support is located at the other end of the groove or close to this end,

The inventor has noticed that the supports known from WO 2010/034467 ensure only vertical stability of a central shelf and the side walls of the furniture unit. In other words, the supports known from WO 2010/034467 do not provide any pulling action between the shelf and the side walls. Namely, the known supports do not pull the edges of the shelf towards the side walls. This disadvantageously has the effect that the position of the shelf is not perfectly fixed between the two side walls of the furniture unit, but that instead the shelf may have a degree of play in the horizontal direction between the side walls. The supports known from WO 2010/034467, moreover, may not be used to connect the side walls to the top or bottom surfaces since they do not ensure the necessary stability of the structure.

Another joining device is known from Italian patent IT 1,411,456. The joining device known from IT 1,411,456 is designed to fasten together a first panel and a second panel of a furniture unit or the like, the joining device being configured to be associated with the first panel and comprising a main body and a spring, wherein the spring is fastened to the main body and is at least partially deformable elastically as a result of the cooperation with a fixing member fixed to the second panel so as to draw elastically the first panel towards the second panel.

The device known from IT 1,411,456 is very efficient since it is able to pull elastically a horizontal panel towards a vertical panel. The furniture unit thus assembled is very solid and stable. However, the proposed aim of the inventor is to improve the known joining device so that it is entirely invisible once the furniture unit has been assembled. The inventor has in fact noted that the known joining device requires small milled openings formed on the edges of the horizontal panels. These small milled openings must allow the heads of the projecting pins fixed to the flanks to pass through when the horizontal panel is lowered to cause the engagement between the pin and the joining device. The small milled openings, no matter how small, are nevertheless visible when looking at the side (usually the bottom side) of the horizontal panel.

EP 2 609 833 A1 discloses a concealed shelf-support device.

WO 2015/158622 A1 discloses a device for assembly/joining of parts of modular furniture and furnishing accessories.

### SUMMARY OF THE INVENTION

Therefore the object of the present invention is to provide a system for joining together two panels of a furniture unit or the like which is entirely invisible when the panels are joined together and which provides an elastic force for pulling one panel towards the other one.

The joining system according to the invention comprises a pin and a joining device. For easier illustration, below in the present description and in the claims, the joining device will also be referred to simply as "device". Moreover, below in the present description, by way of a non-limiting example, reference will be made to a joining device able to fasten a horizontal panel (shelf) to the shoulders of a furniture unit.

According to a first aspect of the invention, a joining system is provided for fastening together a shelf and an upright of a piece of furniture or the like, the joining system comprising a joining device configured so as to be recessed into the edge of the shelf and a pin fixed to the upright, wherein said pin comprises a cylinder configured so as to be inserted into a hole of the upright and a head flexibly protruding from said cylinder; wherein said joining device comprises a main body having a substantially circular section at least partially deformable when in engagement with the head of the pin so as to flexibly draw together the shelf and the upright, wherein the joining device comprises a pin, wherein the main body (20) comprises a side wall with an edge, an engaging wall extending substantially so as to close the main body and a notch in said engaging wall;
wherein said notch is shaped substantially as a bottle with a widened part, a neck and one end,
wherein said joining device comprises a chute configured so as to cooperate with the head of the pin when the shelf must be unhooked from the upright,
wherein the engaging wall forms a depression in correspondence of at least part of said notch in such a way that at least a part of the engaging wall is recessed with respect to a plane of the edge, and
wherein the engaging wall follows a part of the edge of the side wall of the main body, but forms said depression next to the neck and the end.

Preferably, the chute comprises an inclined surface located substantially next to said widened part.

Preferably, the inclined surface is inclined at an angle of between 45° and 60° with respect to the bottom surface of said main body.

In embodiments, the pin comprises a spring configured so as to push the head of the pin outside the cylinder.

The spring may be a conical spring.

The cylinder preferably comprises a thread on a lateral surface thereof and a front part of the pin comprises notches for the head of a screwdriver.

### BRIEF DESCRIPTION OF DRAWINGS

The present invention will become clearer from the following detailed description, provided by way of a non-limiting example, to be read with reference to the accompanying drawings, in which:
- Figures 1 and 2 are two axonometric views of the joining device of the system according to an embodiment of the invention;
- Figure 3 is a side view of the device according to Figures 1 and 2;
- Figure 3A is a cross-section along the line A-A of Figure 3;
- Figure 4 is another side view of the device according to Figures 1 and 2;
- Figure 4B is a cross-section along the line B-B of Figure 4.
- Figure 5 is an axonometric view of the pin of the system according to an embodiment of the invention;
- Figure 6 is a side view of the pin according to Figure 5;
- Figure 6C is cross-section along the line C-C of Figure 6.
- Figure 7 is a front-end view of the pin;
- Figures 8a, 8b, 9a, 9b, 10a and 10b are views which show the steps for assembly of a horizontal panel (shelf) together with a vertical panel (shoulder or upright).

### DESCRIPTION OF EXAMPLES

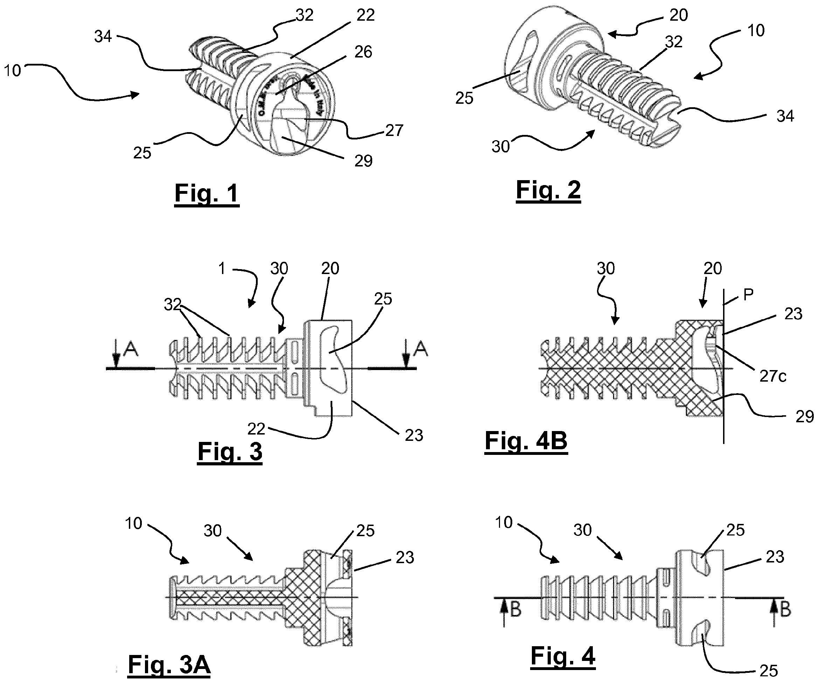

Figures 1 and 2 show a joining device 10 of a joining system 100 according to an embodiment of the present invention. The joining system comprises, in addition to the joining device 10, a pin 50.

The purpose of the joining system according to the invention is to fasten together two panels in a reversible and substantially invisible manner. In the present description the two panels will be called "first panel and second panel" or "horizontal panel and vertical panel". For the sake of simplicity, the two panels will also be called "shelf and upright", this definition being intended to include any panel arranged substantially horizontal and any panel arranged substantially vertical.

The joining device 10 comprises a main body 20 and a pin 30 projecting from the base of the main body 20. Preferably, the pin 30 is a substantially cylindrical body having a circular section. Preferably, the pin 30 comprises a plurality of scales 32 for preventing the pin from coming out the respective hole in which it is seated when in use. Preferably, as shown in Figures 1 and 2, the pin 30 has a pair of radially opposite longitudinal incisions 34.

The main body 20 has preferably a cylindrical shape with a circular section. The main body is at least partially hollow with a flat closed base 21 (Figure 2) and a side wall 22 along the entire perimeter.

The perimetral side wall 22 comprises two respective elongated eyelets 25. The eyelets 25 are visible, for example, in Figures 1, 2, 3, 3A, 4 and 4B.

The main body comprises an engaging wall 26 configured to engage the head of a pin (which will be described below). The engaging wall 26 extends substantially so as to close the main body 20. The engaging wall 26 comprises a notch 27 (Figure 1) shaped substantially as a bottle with a widened part 27a, a neck 27b and one end 27c.

According to the invention, the engaging wall 26 follows a part of the edge of the side wall 22, but forms a depression next to the neck 27b and the end 27c. Therefore, at least a part of the engaging wall 26 is recessed with respect to a plane P (Figure 4B) of the edge 23 of the side wall 22. Therefore, a part of the engaging wall 26 is recessed with respect to the edge 23 of the side wall 22.

The notch 27, in its end 27c, has preferably the shape of a circle and forms the end-of-travel and stop position for the pin 50, as will become clear below. Preferably, according to an embodiment of the invention, the notch 27 has a length of about 4-10 mm. The end 27c is preferably at least partially surrounded by a reinforcing rim.

Advantageously, the main body comprises an inclined wall 29, otherwise called "chute", the function of which will be described in detail below. In any case, the main function of the chute 29 is to compress the pin 50, or rather its head, and therefore facilitate extraction of the shelf.

The chute 29 is shown in Figure 1, but in particular in the cross-section of Figure 4B. Preferably, the chute 29 is inclined at an angle of between about 40° and about 55°. Preferably, it is inclined at about 45° with respect to the bottom 21 of the main body 20. The chute starts from the edge of the notch which corresponds to the bottom of the bottle shape mentioned above.

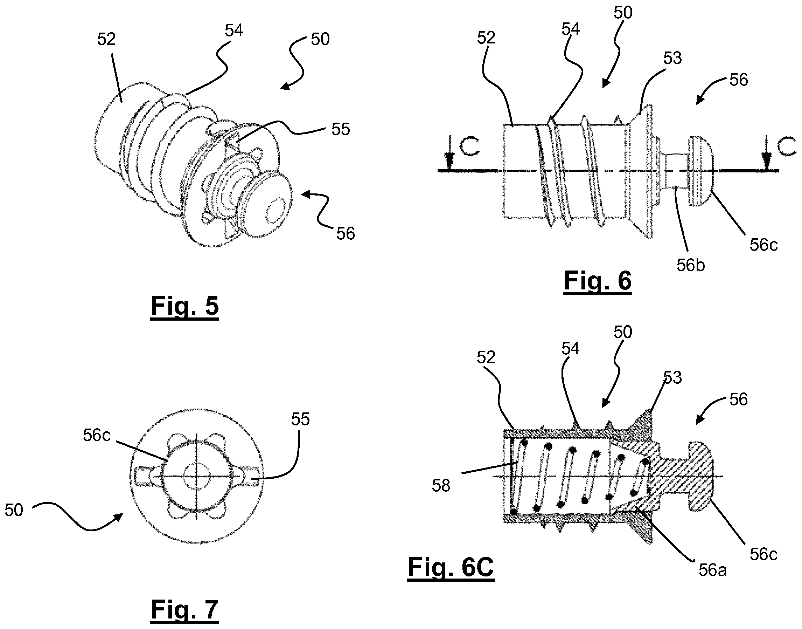

The pin 50 of the joining system will be described hereinbelow with reference to Figures 5, 6, 6C and 7.

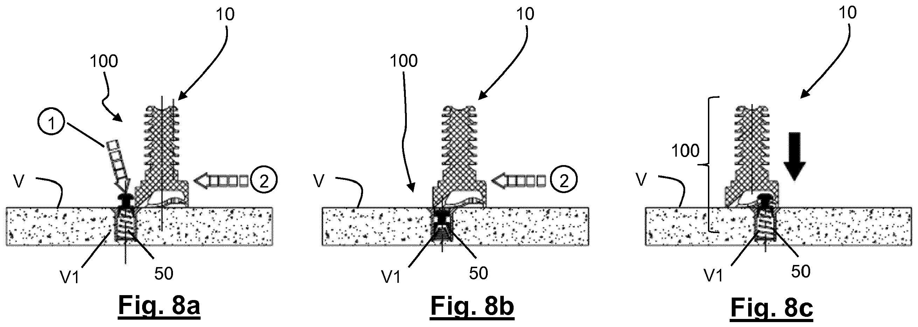

The pin 50 comprises an external cylinder 52, a head 56 and a spring 58. The external cylinder 52 is open at a first end thereof so as to allow the head 56 of the pin to protrude flexibly with respect to the length of the cylinder 52. The external cylinder 52 preferably has an outer wall provided with a thread 54 so as to be able to be screwed inside a hole V1 of a vertical panel V (upright or the like). Preferably, the cylinder 52 has a section with a relatively thin wall, but has a frustoconical form at its first end 53 (Figures 6 and 6C). In this way a front-end surface in the form of a circular rim is formed. Preferably, notches 55 are provided on the circular rim (Figure 8) for the head of a screwdriver or other similar tool.

The spring 58 is housed inside the cylinder 52. Preferably, the spring 58 is a conical spring with turns having a smaller diameter towards the open end of the cylinder (Figure 6C).

The head 56 is shaped so as to have at least one part 56a configured to slide inside the cylinder 52, in engagement with the spring 58, a narrow neck 56b and a wider part 56c. The various Figures 5, 6, 6C and 7 show the pin 50 in the configuration where the narrow neck 56b and the wider part 56c project from the cylinder 52 and are kept in this position by the spring 58. In another configuration, the head 56 may be pressed so to act against the spring 58 until its retracts completely inside the cylinder 52. This configuration allows the pin 50 to be screwed inside a corresponding hole V1 of the vertical panel V (flank or shoulder) of a furniture unit. Moreover, it allows a horizontal panel (shelf) H of a furniture unit to be moved with respect to the vertical panel V so as to fix them stably or separate them.

With reference to Figures 8a-8c, 9a, 9b, 10a and 10b, a description is now provided as to how to fasten a horizontal panel H to a vertical panel V of a furniture unit, using the joining system 100 of the present invention.

Figures 8 shows the pin 50 already screwed inside a hole V1 of the vertical panel V. For greater clarity, the horizontal panel is not shown, but only the joining device 10 is shown. The head 56 of the pin 50 is pressed so that it retracts inside the cylinder 52. For as long as the pin 50 slides against the edge H2 of the thickness of the shelf H, the head 56 of the pin 50 remains inside the cylinder 52 and does not protrude. Once the pin 50 encounters the chute 29 of the main body 20 of the joining device 10, the head 56 of the pin 50 moves out gently sliding along the chute 29 (Figure 8b). When the shelf H is displaced further, the head 56 of the pin 50 engages the mouth 27a of the notch 27, and then the neck 27b of the notch until it reaches the end-of-travel point 27c which forms the stop position for the pin 50. In this position the engagement between the pin 50 and the joining device 10 elastically pulls the edge H2 of the shelf H towards the vertical panel V. A kind of leaf spring effect is created owing to the arched form of the joining device 10 which is engaged by the head 56 of the pin 50.

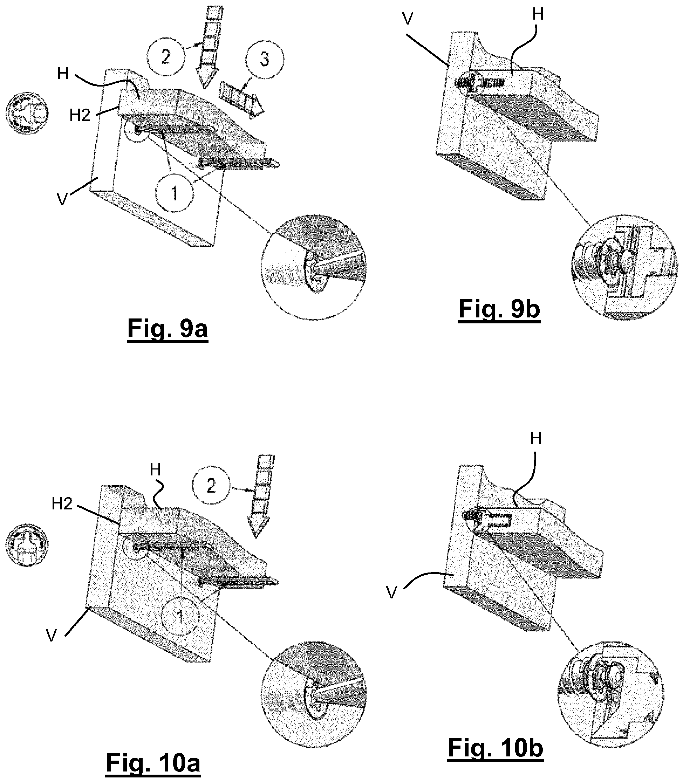

Figures 9a and 9b illustrate in schematic form the movements to be performed in order to fasten a shelf H to a flank V, according to a first mode. In this mode, the two joining devices are arranged with the axis of the notch substantially horizontal. In a first step (arrows 1) the heads 56 of the pins 50 are pushed and retracted inside the cylinders 52. In a second step (arrows 2) the shelf H is pushed downwards, still keeping the heads 56 of the pins 50 inside the cylinders 52 and not protruding. In a third step (arrow 3) the shelf H is displaced so as assume the configuration shown in Figure 9a and then that shown in Figure 9b.

Figures 10a and 10b illustrate in schematic form the movements to be performed in order to fasten a shelf H to a flank V, according to a second mode. In this mode, the two joining devices are arranged with the axis of the notch substantially horizontal. In a first step (arrows 1) the heads 56 of the pins 50 are pushed and retracted inside the cylinders 52. In a second step (arrows 2) the shelf H is pushed downwards, still keeping the heads 56 of the pins 50 inside the cylinders 52 and not protruding. It should be noted that in this second mode a horizontal translational movement is not envisaged since the shelf H is located already flush with the edge of the upright.

Advantageously, the system 100 according to the invention is invisible, i.e. the shelf H does not have visible holes: the two sides of the shelf H do not have holes or openings. Preferably, each single joining device 10 is housed inside a suitably shaped milled opening, but a continuous milled opening between two joining devices of a same shelf is not necessary.

Advantageously, the shelf H may be disassembled by sliding it in the opposite direction to the direction of assembly: i.e. from the initial configuration shown in Figure 9b, the shelf H may be slid so as to bring it into the configuration shown in Figure 9a. A further sliding movement cause the head 56 of the pin 50 to slide along the chute 29 and move back gently inside the cylinder against the resilient force of the spring 58. Once the head of the pin is completely retracted, the shelf H is free to be separated from the flanks V.

Similarly, if the joining devices are arranged with the axis of the notch vertical, the shelf needs merely be lifted. In this way the heads of the pins will engage the respective chutes 29 and will be pressed against the force of the spring, allowing the shelf to be separated from the shoulders.

This second configuration is very convenient and advantageous, but has the sole drawback that, in the event of an accidental impact of the shelf from the bottom upwards, the shelf lifts up and separates from the uprights. In the first configuration this possibility is prevented.

## Claims

1. A joining system (100) for fastening together a shelf (H) and an upright (V) of a piece of furniture or the like, the joining system (100) comprising a joining device (10) configured so as to be recessed into the edge (H2) of the shelf (H) and a pin (50) fixed to the upright (V),
wherein said pin (50) comprises a cylinder (52) configured so as to be inserted into a hole (V1) of the upright (V) and a head (56) flexibly protruding from said cylinder (52);
wherein said joining device (10) comprises a main body (20) having a substantially circular section at least partially deformable when in engagement with the head (56) of the pin (50) so as to flexibly draw together the shelf (H) and the upright (V), wherein the joining device (10) comprises a pin (30), wherein the main body (20) comprises a side wall (22) with an edge (23), an engaging wall (26) extending substantially so as to close the main body (20) and a notch (27) in said engaging wall (26);
wherein said notch (27) is shaped substantially as a bottle with a widened part (27a), a neck (27b) and one end (27c),
wherein said joining device (10) comprises a chute (29) configured so as to cooperate with the head (56) of the pin (50) when the shelf (H) must be unhooked from the upright (V),
wherein the engaging wall (26) forms a depression in correspondence of at least part of said notch (27) in such a way that at least a part of the engaging wall (26) is recessed with respect to a plane (P) of the edge (23), and
**characterized in that** the engaging wall (26) follows a part of the edge (23) of the side wall (22) of the main body (20), but forms said depression next to the neck (27b) and the end (27c).

2. The joining system (100) according to claim 1, wherein said chute (29) comprises an inclined surface substantially located next to said widened part (27a).

3. The joining system (100) according to claim 2, wherein said inclined surface (29) is inclined at an angle of between 45° and 60° with respect to the bottom surface (21) of said main body (20).

4. The joining system (100) according to any one of the preceding claims, wherein said pin (50) comprises a spring (58) configured so as to push the head (56) of the pin (50) outside the cylinder (52).

5. The joining system (100) according to claim 4, wherein said spring (58) is a conical spring.

6. The joining system (100) according to any one of the preceding claims, wherein the cylinder (52) comprises a thread (54) on a lateral surface thereof and a front part of the pin comprises notches (55) for the head of a screwdriver.

## Patentansprüche

1. Verbindungssystem (100) zum Verbinden eines Bretts (H) mit einer Stütze (V) eines Möbelstücks oder dergleichen,
wobei das Verbindungssystem (100) eine Verbindungseinrichtung (10), welche so konfiguriert ist, um in den Rand (H2) des Bretts (H) eingebaut zu werden, und einen Bolzen (50), welcher an der Stütze (V) befestigt ist, aufweist,
wobei der Bolzen (50) einen Zylinder (52), welcher konfiguriert ist, um in ein Loch (V1) in der Stütze eingesetzt zu werden, und einen flexibel von dem Zylinder (52) abstehenden Kopf (56) aufweist;
wobei die Verbindungseinrichtung (10) einen Hauptkörper (20) mit einem im Wesentlichen runden Abschnitt aufweist, welcher zumindest teilweise verformbar ist, wenn er sich in Eingriff mit dem Kopf (56) des Bolzens (50) befindet, um das Brett (H) und die Stütze (V) flexibel zusammenzuziehen,
wobei die Verbindungseinrichtung (10) einen Stift (30) aufweist,
wobei der Hauptkörper (20) eine Seitenwand (22) mit einem Rand (23), eine sich im Wesentlichen so erstreckenden Eingriffswand (26), um den Hauptkörper (20) zu schließen, und eine Kerbe (27) in der Eingriffswand (26), aufweist;
wobei die Kerbe (27) im Wesentlichen die Form einer Flasche mit einem aufgeweiteten Teil (27a), einem Hals (27b) und einem Ende (27c) aufweist,
wobei die Verbindungseinrichtung (10) eine Schräge (29) aufweist, welche konfiguriert ist, um mit dem Kopf (56) des Bolzens (50) zusammenzuwirken, wenn das Brett (H) aus der Stütze (V) ausgehängt werden muss,
wobei die Eingriffswand (26) entsprechend mindestens einem Teil der Kerbe (27) eine Vertiefung so ausbildet, dass mindestens ein Teil der Eingriffswand (26) bezüglich einer Ebene (P) des Randes (23) ausgespart ist, und
**dadurch gekennzeichnet,**
**dass** die Eingriffswand (26) einem Teil des Randes (23) der Seitenwand (22) des Hauptkörpers (20) folgt, jedoch die Vertiefung neben dem Hals (27b) und dem Ende (27c) ausbildet.

2. Verbindungssystem (100) nach Anspruch 1, wobei die Schräge (29) eine geneigte Oberfläche aufweist, welche sich im Wesentlichen neben dem aufgeweiteten Teil (27a) befindet.

3. Verbindungssystem (100) nach Anspruch 2, wobei die geneigte Oberfläche (29) um einen Winkel zwischen 45° und 60° bezüglich der Unterseite (21) des Hauptkörpers (20) geneigt ist.

4. Verbindungssystem (100) nach einem der vorhergehenden Ansprüche, wobei der Bolzen (50) eine Feder (58) aufweist, welche so konfiguriert ist, um den Kopf (56) des Bolzens (50) aus dem Zylinder (52) herauszudrücken.

5. Verbindungssystem (100) nach Anspruch 4, wobei die Feder (58) eine Kegelfeder ist.

6. Verbindungssystem (100) nach einem der vorhergehenden Ansprüche, wobei der Zylinder (52) auf einer Seitenoberfläche ein Gewinde (54) aufweist und ein Vorderteil des Bolzens Kerben (55) für den Kopf eines Schraubenziehers aufweist.

## Revendications

1. Système d'assemblage (100) pour fixer une étagère (H) et un montant (V) d'un meuble ou similaire, le système d'assemblage (100) comprenant un dispositif d'assemblage (10) configuré pour être enfoncé dans le bord (H2) de l'étagère (H) et une goupille (50) fixée sur le montant (V),
dans lequel ladite goupille (50) comprend un cylindre (52) configuré afin d'être inséré dans un trou (V1) du montant (V) et une tête (56) faisant saillie, de manière flexible, dudit cylindre (52) ;
dans lequel ledit dispositif d'assemblage (10) comprend un corps principal (20) ayant une section sensiblement circulaire au moins partiellement déformable lorsqu'il est en mise en prise avec la tête (56) de la goupille (50) afin de rassembler, de manière flexible, l'étagère (H) et le montant (V), dans lequel le système d'assemblage (10) comprend une goupille (30), dans lequel le corps principal (20) comprend une paroi latérale (22) avec un bord (23), une paroi de mise en prise (26) s'étendant sensiblement afin de fermer le corps principal (20) et l'encoche (27) dans ladite paroi de mise en prise (26) ;
dans lequel ladite encoche (27) est formée sensiblement comme une bouteille avec une partie élargie (27a), un goulot (27b) et une extrémité (27c), dans lequel :
ledit dispositif d'assemblage (10) comprend une goulotte (29) configurée afin de coopérer avec la tête (56) de la goupille (50) lorsque l'étagère (H) doit être décrochée du montant (V),
dans lequel :
la paroi de mise en prise (26) forme une dépression en correspondance d'au moins une partie de ladite encoche (27) de sorte qu'au moins une partie de la paroi de mise en prise (26) est enfoncée par rapport à un plan (P) du bord (23), et
**caractérisé en ce que** la paroi de mise en prise (26) suit une partie du bord (23) de la paroi latérale (22) du corps principal (20), mais forme ladite dépression à côté du goulot (27b) et de l'extrémité (27c).

2. Système d'assemblage (100) selon la revendication 1, dans lequel ladite goulotte (29) comprend une surface inclinée sensiblement positionnée à proximité de ladite partie élargie (27a).

3. Système d'assemblage (100) selon la revendication 2, dans lequel ladite surface inclinée (29) est inclinée à un angle compris entre 45° et 60° par rapport à la surface inférieure (21) dudit corps principal (20).

4. Système d'assemblage (100) selon l'une quelconque des revendications précédentes, dans lequel ladite goupille (50) comprend un ressort (58) configuré pour pousser la tête (56) de la goupille (50) à l'extérieur du cylindre (52).

5. Système d'assemblage (100) selon la revendication 4, dans lequel ledit ressort (58) est un ressort conique.

6. Système d'assemblage (100) selon l'une quelconque des revendications précédentes, dans lequel le cylindre (52) comprend un filetage (54) sur sa surface latérale et une partie avant de la goupille comprend des encoches (55) pour la tête d'un tournevis.
